# EUROPEAN PATENT SPECIFICATION

(11) **EP 1 050 039 B1**
(45) Date of publication and mention of the grant of the patent: **14.09.2005**
(21) Application number: 98903703.1
(22) Date of filing: 23.01.1998
(51) Int. Cl.: G10K 11/178, F16F 7/10

(54) **EFFICIENT MULTI-DIRECTIONAL ACTIVE VIBRATION ABSORBER ASSEMBLY**
MULTIAXIALER EFFIZIENTER AKTIVER SCHWINGUNGSDÄMPFER
ENSEMBLE AMORTISSEUR DE VIBRATIONS ACTIF MULTI-DIRECTIONNEL EFFICACE

(43) Date of publication of application: 08.11.2000
(73) Proprietor: LORD CORPORATION, Cary, NC 27512-8012 (US)
(72) Inventor: IVERS, Douglas, E., Cary, NC 27511 (US)
(74) Representative: Dunlop, Brian Kenneth Charles
(86) International application number: PCT/US1998/001387
(87) International publication number: WO 1999/038153

(56) References cited:
- EP-A- 0 554 057
- WO-A-96/12121
- US-A- 4 470 121
- US-A- 5 310 137
- DATABASE INSPEC INSTITUTE OF ELECTRICAL ENGINEERS, STEVENAGE, GB Inspec No. 5762490, PRATT J R ET AL: "A Terfenol-D nonlinear vibration absorber" XP002080109 & SMART STRUCTURES AND MATERIALS 1997: SMART STRUCTURES AND INTEGRATED SYSTEMS, vol. 3041, pages 56-66, ISSN 0277-786X, Proceedings of the SPIE - The International Society for Optical Engineering, 1997, SPIE-Int. Soc. Opt. Eng, USA

## Description

### Field of the Invention

This invention relates to the area of devices and systems for controlling acoustic noise and/or vibration. Specifically, it relates to actively-controlled devices for controlling noise and/or vibration via Active Structural Control (ASC) methods.

### Background of the Invention

Within the prior art, various means have been developed to counter noise and/or vibration problems. These include passive treatments, passive Tuned Vibration Absorbers (TVAs), Adaptive TVAs (ATVAs), Active Noise Control (ANC), Active Structural Control (ASC), and Active Isolation Control (AIC) all of which will be briefly described herein. Passive treatments, such as sound-deadening blankets, are generally effective in attenuating higher-frequency noise, but are generally ineffective at attenuating low-frequency noise, for example, low-frequency engine tones. Notably, passive blankets must be relatively massive to reduce low-frequency noise transmission into a vehicle's cabin. Therefore, other mechanisms are generally employed for low-frequency vibration/noise suppression.

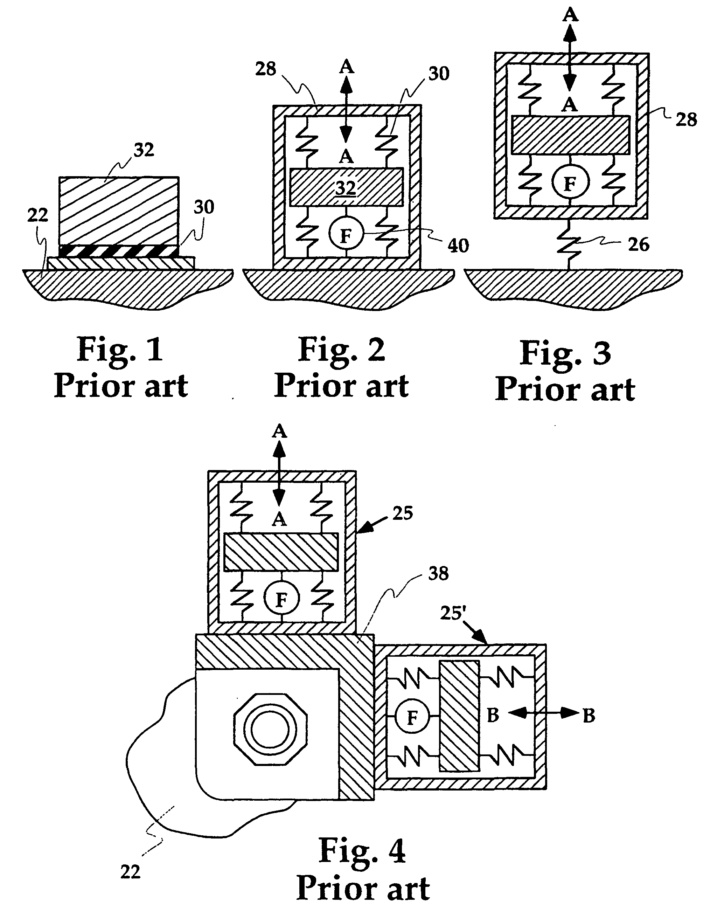

Passive Tuned Vibrations Absorbers (TVA's) are known devices which find utility in absorbing low-frequency vibration to provide local vibration reduction at their attachment point. TVAs may also be effective at cancelling low-frequency noise within a vehicle's cabin which is radiating from the surrounding structure. Although, TVAs are generally well adapted for attenuating low-frequency noise, they are generally somewhat limited in range and effectiveness. As shown in Prior Art **Fig. 1,** passive TVAs include a suspended tuning mass 32 which is tuned (along with a stiffness of spring 30), such that the device exhibits a resonant natural frequency (fn) which generally cancels or absorbs vibration of the vibrating structure 22 at the point of attachment thereto. The afore-mentioned disadvantage of passive TVAs is that they are only effective at a particular frequency (fn) or within a very narrow frequency range thereabouts. Therefore, TVAs may be ineffective if the disturbance frequency is changed, such that the TVA is not excited at its resonant frequency (fn). Moreover, passive TVAs may be unable to generate proper magnitude or phasing of forces needed for effective vibration suppression and/or control. In aircraft, passive TVAs may be attached to the interior stiffening rings or stringers of the fuselage or to the yoke. US Pat. No. 3,490,556 to Bennett, Jr. et al. entitled: "Aircraft Noise Reduction System With Tuned Vibration Absorbers" describes a passive vibration dampening device for attachment on the yoke of an aircraft for absorbing vibration at the N1 and N2 rotational frequencies.

When a wider range of vibration cancellation is required, various adaptive TVAs may be employed. For example, US Pat. No. 3,487,888 to Adams et al. entitled "Cabin Engine Sound Suppresser" teaches an adaptive TVA where the resonant frequency (fn) can be adaptively adjusted by changing the "length" of a beam, or the rigidity of a resilient cushioning material. Although, the range of vibration attenuation may be increased with adaptive TVAs, they still may be somewhat ineffective for certain applications, in that their range of adjustment may not be large enough, or they may not be able to generate large enough dynamic forces to dramatically reduce acoustic noise or vibration experienced within a vehicle's cabin, albeit, under certain circumstances they may be quite effective.

In some applications where a higher level of noise and/or vibration attenuation is desired, Active Isolation Control (AIC) systems may be used for controlling noise/vibration within the vehicle. AIC systems include "active mountings" which are attached between the engine (disturbance source) and its attachment structure (frame, pylon, etc.). Active mounting include an actively driven element therein, which provides the active control forces for isolating vibration and preventing its transmission from the engine into the vehicle's structure. The resultant effect is a reduction of annoying interior acoustic noise, as well as a reduction in vibration, in most cases. Known AIC systems include the feedforward type, in which reference signals from reference sensors are used to provide a signal indicative of the engine vibration(s) to the control process. Likewise, error sensors provide error signals indicative of the residual noise/vibration. These reference and error signals are processed by the digital controller to generate output signals of the appropriate phase and magnitude (anti-vibration) to drive an output active mounting to reduce vibration transmission from the engine to the structure, and resultantly control the interior acoustic noise and structural vibration.

US Pat. No. 5,551,650 entitled "Active Mounts For Aircraft Engines" describes one such AIC system. Furthermore, commonly assigned US Pat. No. 5,174,552 to Hodgson et al. entitled "Fluid Mount With Active Vibration Control" describes one type of active fluid mounting. Notably, it should be understood, that in some applications there may be insufficient space envelope to house the active elements within the active mounting. Further, there may be alternate vibration paths into the structure, or the appropriate actuation directions required for good vibration attenuation may be difficult to achieve within the space constraints of the active mount. Therefore, under these circumstances, other types of active control may be implemented, such as Active Noise Control (ANC) or Active Structural Control (ASC).

Active Noise Control (ANC) systems are also well known. ANC systems include a plurality of acoustic output transducers, such as loudspeakers, strategically located within the vehicle's cabin/passenger compartment. These loudspeakers are driven responsive to input signals from input sensors representative of the disturbance and error signals from error sensors disbursed within the vehicle's cabin. Input signals may be derived from engine tachometers, accelerometers, or the like. The output signals to the loudspeakers are generally adaptively controlled via a digital controller according to a known feedforward-type adaptive control algorithms, such as the Filtered-x Least Mean Square (LMS) algorithm, or the like. Copending US patent application Serial Number 08/553,227 to Billoud entitled "Active Noise Control System For Closed Spaces Such As Aircraft Cabins" describes one such ANC system. Further discussions of ANC systems may be found in US Pat. No. 5,526,292 to Hodgson et al. entitled "Broadband Noise And Vibration Reduction." ANC systems have the disadvantage that they do not address any mechanical vibration problem that may exist, and may be difficult to retrofit in certain vehicles. Furthermore, as the frequency of the noise increases, larger numbers of error sensors and speakers are required to achieve sufficient global noise attenuation.

Certain ASC systems utilizing AVAs, known in the prior art, may solve this problem of needing a large number of error sensors by attacking the vibrational modes of the vehicle's structure directly. For example, by attaching a vibrating device, such as an inertial shakers or AVAs to the interior surface of the fuselage, as described in US Pat. No. 4,715,559 to Fuller, global attenuation can be achieved with a minimal number of error sensors. However, the modifications necessary to retrofit AVAs in this manner may be prohibitive, as the interior trim may have to be removed and structural modifications made have to be made to the stringers or stiffening-ring frames. Furthermore, for control of higher order tones, a large number of AVAs may be needed, thereby requiring large power requirements for each AVA and associated amplifier. Therefore, prior art ASC systems are necessarily difficult to retrofit and may require the use of many inertial shakers to effectuate control of higher-order tones. US Pat. No. 5,310,137 to Yoerkie, Jr. et al. describes the use of AVAs to cancel high-frequency vibrations of a helicopter transmission. Notably, Yoerkie, Jr. et al. is a feedback-type system.

As described in Prior Art **Fig. 2,** Active Vibration Absorbers (AVAs) comprise a tuning mass 32, a housing 28, a spring 30 flexibly supporting the tuning mass 32, and a force actuator 40 (coil and magnet assembly or the like) for actively driving the tuning mass 32 along its acting axis A-A. The stiffness of spring 30 and mass of tuning mass 32 may be tuned such that the AVA is more easily driven at its predominant frequency. Prior Art Fig. 3 describes a Multiple-Degree-of-Freedom Active Vibration Absorber (MDOF AVA). MDOF AVAs include an extra flexible member 26. The mass of housing 28 and stiffness of additional flexible member 26 are tuned to provide a second resonant frequency. Further descriptions of AVAs and MDOF AVAs can be found in Copending US Application Serial Number 08/322,123 entitled "Active Tuned Vibration Absorber", copending PCT application PCT/US95/13610 (WO 96/12121) entitled "Active Systems and Devices Including Active Vibration Absorbers (AVAs)", US Serial Number 08/698,544 entitled "Active Noise and Vibration Control System", US Serial Number 08/693,742 entitled "Active Structural Control System and Method Including Active Vibration Absorbers (AVAs), and US Serial Number 08/730,773 entitled "Hybrid Active-Passive Noise and Vibration Control System for Aircraft." **Fig. 4** illustrates one prior art preferred implementation for achieving active forces in multiple directions. The AVAs (which could also be MDOF AVAs) are attached to rigid bracket 38 which attaches to structure 22 via fastener shown. The inertial shakers/AVAs 25, 25' shown are actively driven along their acting axes at the appropriate frequency, amplitude, and phase to appropriately control noise and/or vibration.

The individual AVAs described above suffer from the problems that they are either mass inefficient, incapable of multiple direction actuation, or require large amounts of electrical power. Therefore, there is a long felt and recognized need for an AVA assembly which provides multi-directional active vibrational forces to effectively control vibration within the structure, which is efficient, and which minimizes mass and power requirements for generating the needed cancellation forces.

### Summary of the Invention

Therefore, in light of the advantages and drawbacks of the prior art, the present invention is an Active Vibration Absorber (AVA) assembly of the type useful for control of noise and/or vibration caused by a source of vibration.

According to the present invention there is provided an active vibration absorber assembly for attaching to a vibrating structure, comprising:
a first inertial shaker having a first housing and a first predominant axis of vibration, and a second inertial shaker having a second housing rigidly secured to the first housing, said second inertial shaker having a second predominant axis of vibration which is oriented orthogonally relative to the first predominant axis and a flexible member suspending the first and second housings from the attached vibrating structure.

It is an advantage of the present invention AVA assembly that it can be easily retrofitted, in the field, without extensive modifications to the structure.

It is an advantage of the present invention AVA assembly that it can control vibration over a wider frequency range, thereby controlling unwanted and annoying acoustic noises within the vehicles cabin over a wider frequency range.

It is an advantage of the present invention AVA assembly that it can control vibration in multiple directions.

It is an advantage of the present invention AVA assembly that it can generate large dynamic forces with a less massive device.

It is an advantage of the present invention AVA assembly that it is efficient, thus reducing size and power requirements.

It is an advantage of the present invention AVA assembly that it can control multiple vibrational frequencies.

The abovementioned and further features, advantages, and characteristics of the invention will be apparent from the accompanying descriptions of the preferred and other embodiments and attached drawings.

### Brief Description of the Drawings

The accompanying drawings which form a part of the specification, illustrate several key embodiments of the present invention. The drawings and description together, serve to fully explain the invention. In the drawings,
**Fig. 1** is a cross-sectional side view of a prior art Tuned Vibration Absorber (TVA),
**Fig. 2** is a cross-sectional side view of a prior art Active Vibration Absorber (AVA),
**Fig. 3** is a cross-sectional side view of a prior art Multi-Degree-of-Freedom Active Vibration Absorber (MDOF AVA),
**Fig. 4** is a cross-sectional side view of a prior art AVA installation,
**Figs. 5** and **6** are partial cross-sectional side and bottom views, respectively, of the present invention multi-directional AVA assembly,
**Figs. 7** and **8** are partial cross-sectional side and end views, respectively, of another embodiment of the multi-directional AVA assembly,
**Fig. 9** is a partial cross-sectional side view of another embodiment of a multi-directional AVA assembly, and
**Fig. 10** is a partial cross-sectional side view of several multi-directional AVA assemblies installed in an Active Structural Control (ASC) system.

### Detailed Description of the Invention

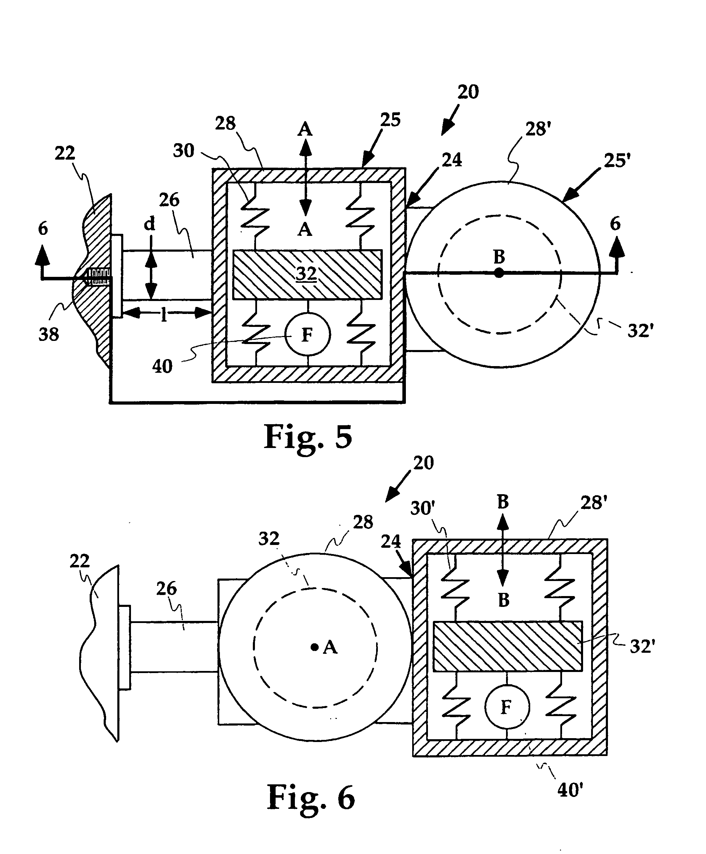

Referring now to the Drawings where like numerals denote like elements, in **Fig. 5** and **6,** shown generally at **20,** is a first embodiment of the present invention AVA. This invention has particular applicability for controlling vibration and noise in aft-fuselage-mounted turbofan aircraft, such as the DC-9 aircraft. The AVA **20** is comprised of a casing **24** flexibly supporting a first tuning mass **32** which is oriented such that it is actively vibrated by active force actuator **40** in a first direction (along axis **A-A)** and a second tuning mass **32'** operatively and actively vibrated along a second direction (along axis **B-B**) which is substantially orthogonal to said first direction, and at least one flexible member **26** flexibly supporting the casing **24.** The AVA **20** attaches to the structure **22** (e: a frame, pylon, etc.) by way of a fastener or the like, but preferably screws into the structure via a single fastener **38.** The flexible member **26** shown is preferably a metal cantilever beam, whereby the stiffness thereof is tuned by adjusting the length **1,** diameter **d,** and modulus of the material used. Other embodiments will be described herein wherein the flexible member **26** comprises multiple flexible beams or flexible elastomer sections.

In this embodiment, the casing **24** is comprised of housings **28, 28'** of inertial actuators **25, 25'.** Each inertial actuator **25, 25'** comprises a tuning mass **32, 32',** and at least one, and preferably a plurality of springs **30, 30'** supporting the tuning masses **32, 32'** relative to the housings **28, 28',** and active force generators **40, 40'** for actively driving the tuning masses **32, 32'** at the appropriate frequency, amplitude, and phase to accomplish the control task, i.e., controlling vibration or noise. It should be understood that the stiffnesses of springs **30, 30',** flexible member **26, 26',** the mass of tuning mass **32, 32',** and the masses of casing **24** would be chosen such that the appropriate resonant frequencies **f1** and **f2** are achieved. By way of example, **f1** might be tuned to be at about 120 hz while f2 might be tuned at about 186 hz.

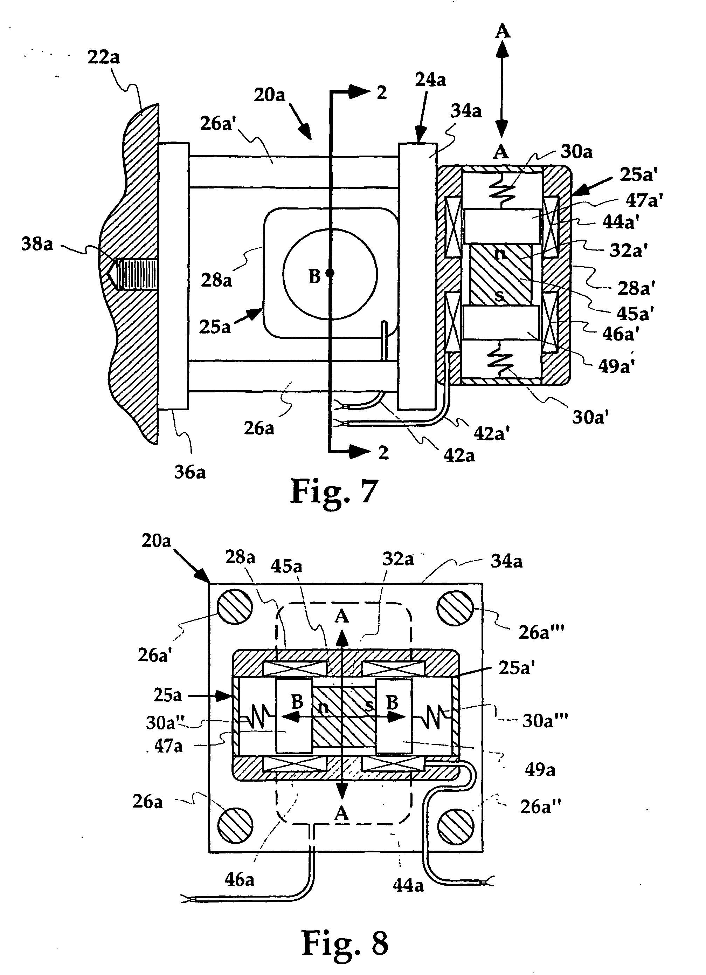

**Fig. 7** and **8** illustrate an embodiment of AVA assembly **20a** that was reduced to practice and tested experimentally. This AVA assembly 20a comprises first and second inertial shakers **25a, 25a'** which are securely attached to an intermediate plate **34a.** The respective axes (**A-A, B-B**) of the shakers **25a, 25a'** are arranged substantially orthogonally. The intermediate plate **34a** is then flexibly supported relative to a base plate **36a** which attaches to structure **22a,** preferably via a single threaded fastener **38a.** The means for flexibly supporting the intermediate plate **34a** relative to the base plate **36a** preferably comprises a plurality of flexible beam members **26a, 26a', 26a", 26a'''.** Preferably, there are four beams spaced at the corners, although more than four may be used as well. By utilizing multiple beam-type flexible members **26a, 26a', 26a", 26a"',** the movement of the intermediate member **34a** in the frequencies of interest can be restricted to generally planar movement, in a plane generally parallel to the plane of the base plate **36a.**

Each of the inertial shakers **25a, 25a'** comprises a housing **28a, 28a'** which is secured to intermediate plate **34a** via brackets, bolts, or the like. The shakers **25a, 25a'** include inertial tuning masses **32a, 32a'** supported by at least one spring, and preferably two springs **30a, 30a', 30a", 30a"'.** The masses of tuning masses **32a, 32a'** and spring stiffnesses of springs **30a, 30a', 30a", 30a'''** are chosen in conjunction with the stiffness of flexible member **26a-26a'''** and mass of casing **24a** to arrive at the appropriate resonant frequencies **f1** and **f2**. The means for constraining the interior tuning masses **32a, 32a'** to move only axially comprises stiff radial flexures, bearings, or the like, which are very stiff radially and sufficiently soft axially to provide the appropriate motion and axial frequency tuning. A more detailed description of this type of actuator used as an inertial shaker may be found in US Pat. No. 5,231,336 to van Namen entitled "Actuator for Active Vibration Control."

It should be understood that by appropriate actuation of tuning masses **32a, 32a'** via electrically energizing leads **42a, 42a',** thereby energizing first and second coils **44a, 44a', 46a, 46a'** that forces may be generated along the respective A-A and B-B axes. Appropriate phasing of these forces can produce forces along axis A-A, along axis B-B or along any other axis in the same plane as axes A-A and B-B. By way of example and not by limitation, the primary mass (casing **24a**) is approximately 5 kg and the primary stiffness of flexible members **26a, 26a', 26a", 26a'''** combined is approximately 25,000 lb./in. (4,375,000 N/m). Likewise, the tuning masses **32a, 32a'** are preferably approximately 1 Kg each and the combined stiffnesses of the springs 30a acting on masses **32a, 32a'** are approximately 5,000 lb./in. (875,000 N/m). Therefore, the predominant resonant frequencies are about f1=120 hz and f2=186 hz. Each of the masses **32a, 32a'** of inertial shakers comprise permanent magnets **45a, 45a'** and pole pieces **47a, 47a', 49a, 49a'** for directing the magnetic flux.

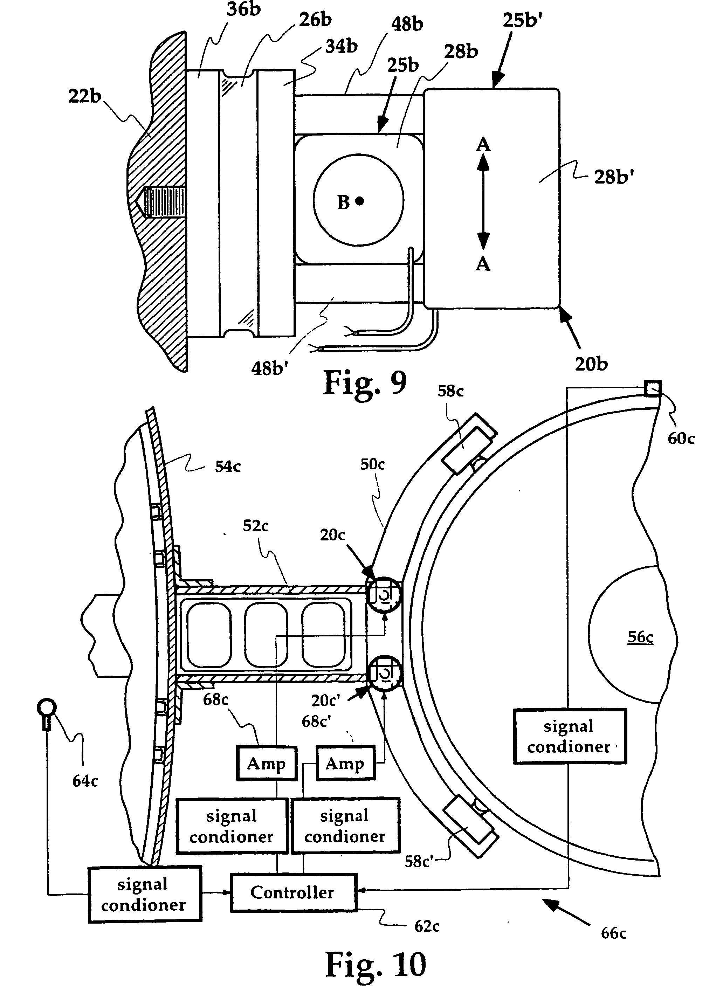

**Fig. 9** illustrates another embodiment of AVA assembly **20b** which comprises a first inertial shaker **25b** having an first housing **28b** and a first predominant axis of vibration **B-B** (the axis is into and out of the paper), a second inertial shaker **25b'** having a second housing **28b'** rigidly secured relative to said first housing 28b and exhibiting a second predominant axis of vibration **(A-A)** which is oriented substantially orthogonally relative to said first predominant axis **(B-B),** and a flexible member **26b** flexibly suspending said first and second housings **28b, 28b'.** Preferably, the shakers 25b, 25b' are secured to intermediate plate **34b.** Further, attached between intermediate plate **34b** and second shaker **25b** may be optional supports **48, 48b'.** In this embodiment, the flexible member **26b** is a planar elastomer section which is bonded between the base plate **36b** and the intermediate plate **34b.** The base plate **36b** preferably includes a single threaded member for securing into structure 22b. The shakers **25b, 25b'** may include coil and magnet assemblies for driving the tuning masses therein. Alternatively, piezoelectric or magnetostrictive actuators may be implemented to drive the tuning masses.

**Fig. 10** illustrates several AVA assemblies **20c, 20c'** included within the environment of an Active Structural Control (ASC) system **66c.** Shown is an engine **56c** attached to a yoke assembly **50c** by engine mounts 58c, **58c'.** The yoke assembly **50c** attaches to pylon structure **52c** which then interconnects to the fuselage **54c** of the aircraft. The AVA assemblies **20c, 20c'** attach at the base portion of the yoke assembly **50c** where the yoke assembly **50c** attaches to the pylon **52c.** A reference signal is provided to the preferably digital controller **62c** by the reference sensor **60c.** The reference sensor **60c** may be an accelerometer, tachometer, or the like and provides a signal representative of the disturbance (frequency, phase and/or amplitude). Error sensors **64c** strategically located in the cabin supply error signals to the controller **62c** indicative of the residual noise level in the aircraft's cabin.

The controller **62c** processes the reference signal and the error signals and provides drive signals to the AVA assemblies **20c, 20c'** to actively drive the tuned masses **(32a, 32a'** of **Figs. 7, 8)** and casing 24a **(Figs. 7, 8)** therein. Control algorithms such as Filtered-x LMS, or the like, may be used to control the assemblies **20c, 20c'.** Because the inertial shakers within the assemblies are substantially smaller than the AVAs shown in prior art **Fig. 4,** the mass of the system is less and the amplifiers **68, 68c'** may be made smaller. Therefore, the power requirements to drive the AVA assemblies **20c, 20c'** are also reduced.

In summary, it should be apparent from the foregoing that the present invention comprises an AVA assembly including a first inertial shaker having a first housing and a first predominant axis of vibration, a second inertial shaker having a second housing rigidly secured relative to the first housing and a second predominant axis of vibration which is oriented orthogonally relative to the first predominant axis, and a flexible member suspending the first and second housings.

While several embodiments including the preferred embodiment of the present invention have been described in detail, various modifications, alterations, changes, and adaptations to the aforementioned may be made without departing from the scope of the present invention defined in the appended claims. It is intended that all such modifications, alterations, and changes be considered part of the present invention.

## Claims

1. An active vibration absorber assembly (20) for attaching to a vibrating structure (22), comprising:
a first inertial shaker (25) having a first housing (28) flexibly attached to a first tuning mass (32) and a first predominant axis of vibration (A-A), and a second inertial shaker (28') having a second housing (28') rigidly secured to the first housing and flexibly attached to a second tuning mass (32'), said second inertial shaker having a second predominant axis of vibration (B-B) which is oriented orthogonally relative to the first predominant axis (A-A), and a flexible member (26) suspending the first and second housings from the attached vibrating structure.

2. An active vibration absorber assembly (20) of Claim 1 **characterized in that** said flexible member (26) comprises at least one flexible beam.

3. An active vibration absorber assembly (20) of Claim 2 further **characterized in that** said at least one flexible beam comprises a plurality of flexible beams.

4. An active vibration absorber assembly (20) of Claim 3 **characterized in that** said plurality of flexible beams comprises at least four flexible beams.

5. An active vibration absorber assembly (20) of Claim 3 **characterized in that** said plurality of flexible beams are spaced laterally apart, such that the vibration of said inertial shakers (25,25') comprises substantially planar motion.

6. An active vibration absorber assembly (20) of Claim 1 **characterized in that** said flexible member (26) comprises an elastomer section.

7. An active vibration absorber assembly (20) of Claim 6 **characterized**
**in that** said elastomer section further comprises a planar elastomer section which operates in shear.

8. An active structural control system including the active vibration absorber assembly (20) of Claim 1 **characterized by**:
a) a reference sensor (60c) for providing a reference signal representative of a disturbance
b) an error sensor (64c) for providing an error signal representative of residual, and
c) a controller (62c) for processing said reference signal and said error signal and providing drive signals to drive said first and second inertial shakers (25,25') within said active vibration absorber assembly (20).

9. An active structural control system of Claim 8 **characterized in that** said active vibration absorber assembly (20) is included within a vehicle.

10. An active structural control system of Claim 9 **characterized in that** said vehicle is an aircraft.

11. An active structural control system of Claim 10 **characterized in that** said assembly is attached to a yoke assembly (50) of said aircraft.

12. An active structural control system of Claim 8 **characterized in that** at least one of said first inertial shaker (25) and said second inertial shaker (25') is actively driven by a coil and magnet assembly (40)

13. An active structural control system of Claim 8 **characterized in that** at least one of said first inertial shaker (25) and said second inertial shaker (25') is actively driven by a magnetostrictive actuator.

14. An active structural control system of Claim 8 **characterised in that** at least one of said inertial shaker (25) and said second inertial shaker (25') is actively driven by a piezoelectric actuator.

## Patentansprüche

1. Aktive Schwingungsdämpferanordnung (20) zur Anbringung an ein schwingendes Gebilde (22), **gekennzeichnet durch** einen ersten Trägheitsschüttelapparat (25) mit einem ersten Gehäuse (28), das flexibel an einer ersten Abstimmasse (32) angebracht ist und eine erste vorherrschende Schwingungsachse (A-A) sowie einen zweiten Trägheitsschüttelapparat (28') mit einem zweiten Gehäuse (28'), das mit dem ersten Gehäuse fest verbunden ist und mit einer zweiten Abstimmasse (32') flexibel in Verbindung steht, wobei der zweite Trägheitsschüttelapparat eine zweite vorherrschende Schwingungsachse (B-B) aufweist, die orthogonal zu der ersten vorherrschenden Achse (A-A) angeordnet ist, und wobei ein flexibler Körper (26) vorhanden ist, der das erste und das zweite Gehäuse an dem angebrachten Schwingungsgebilde aufhängt.

2. Aktive Schwingungsdämpferanordnung (20) nach Anspruch 1, **dadurch gekennzeichnet, daß** der flexible Körper (26) wenigstens einen flexiblen Träger aufweist.

3. Aktive Schwingungsdämpferanordnung (20) nach Anspruch 2, **dadurch gekennzeichnet, daß** der wenigstens eine flexible Träger mehrere flexible Balken aufweist.

4. Aktive Schwingungsdämpferanordnung (20) nach Anspruch 3, **dadurch gekennzeichnet, daß** die mehreren flexiblen Balken wenigstens vier flexible Balken sind.

5. Aktive Schwingungsdämpferanordnung (20) nach Anspruch 3, **dadurch gekennzeichnet, daß** die mehreren flexiblen Balken mit Abstand seitlich nebeneinander liegen, so daß die Schwingung der Trägheitsschüttelapparate (25, 25') aus einer im wesentlichen planaren Bewegung besteht.

6. Aktive Schwingungsdämpferanordnung (20) nach Anspruch 1, **dadurch gekennzeichnet, daß** der flexible Körper (26) einen Elastomerteil bildet.

7. Aktive Schwingungsdämpferanordnung (20) nach Anspruch 6, **dadurch gekennzeichnet, daß** der Elastomerteil darüber hinaus einen ebenen Elastomerteil bildet, der auf Scherung beansprucht wird.

8. Aktives Steuersystem für ein Gebilde mit einer aktiven Schwingungssteueranordnung (20) nach Anspruch 1, **gekennzeichnet durch**
a) einen Bezugssensor (60c), der ein Bezugssignal erzeugt, das für eine Störung kennzeichnend ist,
b) einen Fehlersensor (64c), der ein Fehlersignal erzeugt, das einen Restwert bedeutet und
c) eine Steuereinrichtung (62c) zur Verarbeitung des Bezugssignals und des Fehlersignals und Schaffung von Antriebssignalen, um den ersten und den zweiten Trägheitsschüttelapparat (25, 25') in der aktiven Schwingungsdämpferanordnung (20) anzutreiben.

9. Aktives Gebildesteuersystem nach Anspruch 8, **dadurch gekennzeichnet, daß** die aktive Schwingungsdämpferanordnung (20) Bestandteil eines Fahrzeugs ist.

10. Aktives Gebildesteuersystem nach Anspruch 9, **dadurch gekennzeichnet, daß** das Fahrzeug ein Luftfahrzeug ist.

11. Aktives Gebildesteuersystem nach Anspruch 10, **dadurch gekennzeichnet, daß** die Anordnung an einer Jochanordnung (50) des Luftfahrzeugs angebracht ist.

12. Aktives Gebildesteuersystem nach Anspruch 8, **dadurch gekennzeichnet, daß** wenigstens der erste Trägheitsschüttelapparat (25) oder der zweite Trägheitsschüttelapparat (25') aktiv von einer aus Spule und Magnet bestehenden Anordnung (40) angetrieben werden.

13. Aktives Gebildesteuersystem nach Anspruch 8, **dadurch gekennzeichnet, daß** wenigstens der erste Trägheitsschüttelapparat (25) oder der zweite Trägheitsschüttelapparat (25') von einem Magnetostriktionsantrieb aktiv angetrieben werden.

14. Aktives Gebildesteuersystem nach Anspruch 8, **dadurch gekennzeichnet, daß** wenigstens der erste Trägheitsschüttelapparat (25) oder der zweite Trägheitsschüttelapparat (25') aktiv durch einen piezoelektrischen Antrieb angetrieben werden.

## Revendications

1. Ensemble amortisseur de vibrations actif (20) destiné à être attaché à une structure vibrante (22), comprenant :
- un premier vibreur inertiel (25) ayant un premier boîtier (28) attaché de manière flexible à une première masse d'équilibrage (32) et un premier axe de vibration prédominant (A-A), et un second vibreur inertiel (25') ayant un second boîtier (28') fixé de manière rigide au premier boîtier et attaché de manière de flexible à une seconde masse d'équilibrage (32'), ledit second vibreur inertiel ayant un second axe de vibration prédominant (B-B) qui est orienté orthogonalement par rapport au premier axe prédominant (A-A), et un élément flexible (26) suspendant les premier et second boîtiers à la structure vibrante attachée.

2. Ensemble amortisseur de vibrations actif (20) selon la revendication 1, **caractérisé par le fait que** ledit élément flexible (26) comprend au moins une poutrelle flexible.

3. Ensemble amortisseur de vibrations actif (20) selon la revendication 2, **caractérisé en outre par le fait que** ladite au moins poutrelle flexible comprend une pluralité de poutrelles flexibles.

4. Ensemble amortisseur de vibrations actif (20) selon la revendication 3, **caractérisé par le fait que** ladite pluralité de poutrelles flexibles comprend au moins quatre poutrelles flexibles.

5. Ensemble amortisseur de vibrations actif (20) selon la revendication 3, **caractérisé par le fait que** lesdites différentes poutrelles flexibles sont espacées latéralement, de telle sorte que la vibration desdits vibreurs inertiels (25, 25') comprend un mouvement sensiblement plan.

6. Ensemble amortisseur de vibrations actif (20) selon la revendication 1, **caractérisé par le fait que** ledit élément flexible (26) comprend une section en élastomère.

7. Ensemble amortisseur de vibrations actif (20) selon la revendication 6, **caractérisé par le fait que** ladite section en élastomère comprend en outre une section en élastomère plane qui fonctionne en cisaillement.

8. Système de commande active de structure comprenant l'ensemble amortisseur de vibrations actif (20) selon la revendication 1, **caractérisé par** :
a) un détecteur de référence (60c) pour fournir un signal de référence représentatif de la perturbation ;
b) un détecteur d'erreur (64c) pour fournir un signal d'erreur représentatif du résidu ; et
c) un dispositif de commande (62c) pour traiter ledit signal de référence et ledit signal d'erreur et fournir des signaux de commande pour commander lesdits premier et second vibreurs inertiels (25, 25') à l'intérieur dudit ensemble amortisseur de vibrations actif (20).

9. Système de commande active de structure selon la revendication 8, **caractérisé par le fait que** ledit ensemble amortisseur de vibrations actif (20) est compris à l'intérieur d'un véhicule.

10. Système de commande active de structure selon la revendication 9, **caractérisé par le fait que** ledit véhicule est un avion.

11. Système de commande active de structure selon la revendication 10, **caractérisé par le fait que** ledit ensemble est attaché à un ensemble d'étrier (50) dudit avion.

12. Système de commande active de structure selon la revendication 8, **caractérisé par le fait qu'**au moins l'un parmi ledit premier vibreur inertiel (25) et ledit second vibreur inertiel (25') est commandé de manière active par un ensemble à bobine et aimant (40).

13. Système de commande active de structure selon la revendication 8, **caractérisé par le fait qu'**au moins l'un parmi ledit premier vibreur inertiel (25) et ledit second vibreur inertiel (25') est commandé de manière active par un actionneur magnétostrictif.

14. Système de commande active de structure selon la revendication 8, **caractérisé par le fait qu'**au moins l'un parmi ledit vibreur inertiel (25) et ledit second vibreur inertiel (25') est commandé de manière active par un actionneur piézo-électrique.
